Europäisches Patentamt

European Patent Office

Office européen des brevets

(19)

(11) Publication number: 0 195 272
A2

(12) # EUROPEAN PATENT APPLICATION

(21) Application number: 86102209.3

(51) Int. Cl.⁴: H 04 M 3/50

(22) Date of filing: 20.02.86

(30) Priority: 20.02.85 US 703249

(43) Date of publication of application:
24.09.86 Bulletin 86/39

(84) Designated Contracting States:
AT BE CH DE FR GB IT LI LU NL SE

(71) Applicant: A.T. & E. LABORATORIES, INC.
One Maritime Plaza Suite 2450
San Francisco California 94111(US)

(72) Inventor: Hood, William G.
10980 S.W. 81st Avenue
Tigard Oregon 97223(US)

(72) Inventor: Park, Michael C.
814 S.W. Taylors Ferry Road
Portland Oregon 97219(US)

(72) Inventor: Klarquist, Thomas D.
12520 S.W. Gem Lane
Beaverton Oregon 97005(US)

(72) Inventor: Park, Lawrence B.
4405 S.W. Warrens Way
Portland Oregon 97221(US)

(74) Representative: Dipl.-Phys.Dr. Manitz Dipl.-Ing.,
Dipl.-Wirtsch. Finsterwald Dipl.-Chem.Dr. Heyn
Dipl.-Phys. Rotermund Morgan, B.Sc.(Phys)
Robert-Koch-Strasse 1
D-8000 München 22(DE)

(54) Voice mail system on audio tape.

(57) The present invention is a magnetic tape-based "voice mail" multi-user message system. The invention uses a novel method of partitioning the tape and distributing a number of mailboxes on the tape in such a way as to minimize the average access time to individual mailboxes. This provides the advantages of a truly random access multi-user disk-based system at a small fraction of the cost.

Incoming messages are recorded in random cells on a plurality of tracks on a tape. A memory stores the location of the nearest available cell to the next position of the play/record head. When an incoming message is received, the system directs the play/record head to the nearest cell in order to record a message.

When a user calls in to leave a message, after accessing the system, he inputs a DTMF code indicating that he desires to leave a message, and another code indicating the mailbox address. After recording the message in the nearest cell, the system stores the location of the cell in the directory in association with the designated mailbox address.

FIG.__1.

## VOICE MAIL SYSTEM ON AUDIO TAPE

### BACKGROUND OF THE INVENTION

This invention relates to "voice mail" systems for recording and playing back audio messages for use by a plurality of users.

Substantially all presently known voice mail systems which can be used by more than a few users are disk-based systems. A "voice mail" system is a record and playback system that stores messages intended for one of a plurality of users. All messages for a given user are stored in that user's "mailbox." While individual messages in a mailbox are logically related to a particular user, the messages are physically scattered throughout the disk. A directory stores the physical position of each cell containing a message for the same user, and associates those cells with a single mailbox.

Such disk-based systems are relatively complicated and expensive due to the use of disk storage and the requirement that voice messages be digitized to be stored on the computer disk. An example of such a system is shown in U.S. Patent No. 4,371,752 to ECS Telecommunications, Inc. (now known as VMX). In the VMX system, a subscriber can access the voice mail system through a PBX (private branch exchange) to which the voice mail system is connected. The system, under the control of a computer processor, delivers prompting messages to a user and then responds to user commands. A user can record a message, review messages, or perform a number of other operations. Recorded messages are digitized and stored in a disk memory in association with a mailbox address. When the recorded message is to be replayed, the computer determines the location of messages in memory from the mailbox address indicated by the user. The computer then synthesizes the voice message from the digital representation stored in memory.
A user must enter a personal code in order to review
his messages.  This personal code entry prevents unauthorized access to the system.

Voice mail systems have a number of advantages
over the common answering machine.  For instance, a
single message can be recorded once, but sent to a number of mailboxes on a distribution list.  Messages can
be tagged and organized according to specified parameters
(i.e., urgent, personal, etc.).  A user accessing the
system can then determine the number of messages and
the type of tag without listening to all of the messages.

The use of a cassette tape for a large voice
mail system has been considered impractical because of
the speed limitations in accessing portions of the tape.
One approach is the use of a number of microcassettes
on a carousel.  Some cassette answering machines are
somewhat similar in that they are able to provide personalized greetings for a few callers.  U.S. Patent No.
4,122,306 to Friedman, et al. shows a system which allows
a caller to select a track on the tape having a specialized recorded message by the caller inputting a code
number.  U.S. Patent No. 4,194,089 to Hashimoto is another
cassette system showing a method of providing a specific
message for a specified calling party.  One disadvantage
of such systems is that they are slow because the tape
must be moved until other messages are passed and an
available portion for recording is reached.  Another
disadvantage is that the number of users is limited by
the number of tracks on the tape.

SUMMARY OF THE INVENTION

The present invention is a magnetic tape-based
"voice mail" multi-user message system.  The invention
uses a novel method of partitioning the tape and distributing a number of mailboxes on the tape in such a way
as to minimize the average delay in accessing individual mailboxes.  This provides the advantages of a truly random access multi-user disk-based system at a small fraction of the cost.

Incoming messages are recorded in random cells on a plurality of tracks on a tape.  A memory stores the location of the nearest available cell to the rest position of the play/record head.  When an incoming message is received, the system directs the play/record head to the nearest cell in order to record a message.

When a user calls in to leave a message, after accessing the system, he inputs a DTMF (Dual Tone Multi-Frequency) code indicating that he desires to leave a message, and another code indicating the mailbox address. After recording the message in the nearest cell, the system stores the location of the cell in the directory in association with the designated mailbox address.

When a system user desires to review all messages in his mailbox, he accesses the system and inputs a DTMF ID code and mailbox address.  The play/record head is directed to the track and cell location indicated in the directory for the mailbox address, and the message in the cell is played.  The system then directs the play/record head to other messages in the mailbox, as indicated by the directory in the order received, until all messages for the mailbox have been played. Such a recipient of the messages in a mailbox will be referred to as a "boxholder" herein.

By using a magnetic tape rather than a disk to record messages, the system is more reliable and less expensive with the elimination of the disk and the digitizing circuitry.  By using randomly accessed cells, rather than an entire single track, for each mailbox, the number of mailboxes is dramatically increased and the access speed is increased.  The system is ideally suited for small or medium sized businesses.

In between searches, the play/record head is repositioned at the center of the tape, thereby increasing the access speed to any portion of the tape. The processor and memory keep track of the closest available cells to the center of the tape. Incoming messages are recorded in the closest available cell. If a cell has been deleted from memory for a mailbox after boxholder review, the cell is listed as available and the new message is recorded over the old message in the cell.

Breaking a track of a tape into a number of cells creates difficulties in determining the beginning of a particular cell. Slippage and stretching of the tape and wear on the brakes causes inaccuracies in methods relying on elapsed time or reel revolutions. The detection of a marking signal on the tape is accurate, but requires the tape to be advanced at a slower speed. The preferred embodiment of the present invention combines both methods to obtain the advantages of each method while eliminating the disadvantages of each.

In order to access a cell, the tape is first moved at high speed until the play/record head is at a position close to, but prior to, the indicated location of a mark at the beginning of the cell. The tape is then slowed and played until the mark is detected by a mark detector circuit. The system updates its notion of where it is on the tape to compensate for positioning error. The marking of the beginning of a cell with a mark tone may be done on the first recording of a message in such cell. This eliminates the need to format the tape before using it.

## BRIEF DESCRIPTION OF THE DRAWINGS

FIG. 1 is a block diagram of a preferred embodiment of the present invention.

FIG. 2 is a schematic representation of the tape containing the message cells of the system of FIG. 1.

FIG. 3 is a block diagram of the audio circuitry of the system of FIG. 1.

FIG. 4 is a schematic representation of the counting mechanism of the system of FIG. 1.

FIG. 5 is a flow chart of the recording method of the system of FIG. 1.

FIG. 6 is a flow chart of the playing method of the system of FIG. 1.

DETAILED DESCRIPTION OF THE PREFERRED EMBODIMENT

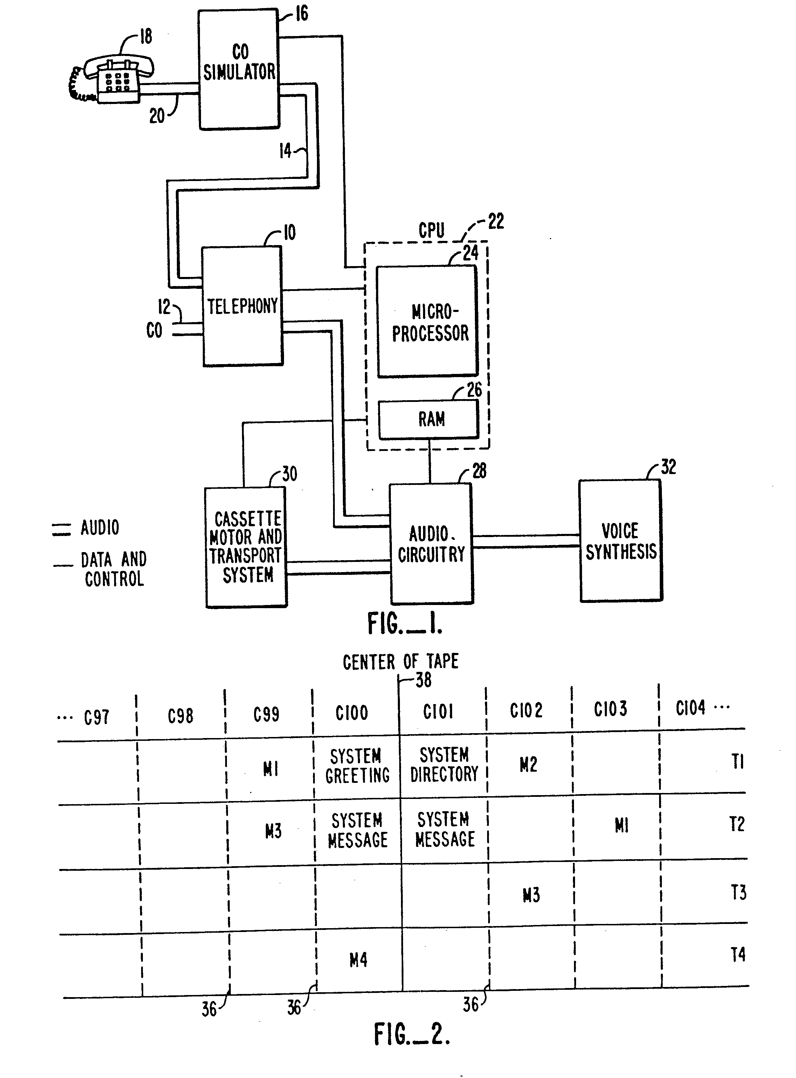

Figure 1 shows a block diagram of the voice mail system of the present invention. Telephony circuit 10 interfaces with the telephone line to the central office 12. Telephony circuit 10 is also coupled via a line 14 to a central office simulator 16. Simulator 16 provides an interface for local access via a telephone 18, or any device that expects a two wire trunk line 20. A CPU (central processing unit) 22 is coupled to simulator 16 and telephony circuit 10. CPU 22 contains microprocessor 24 and RAM (random access memory) 26. Audio circuitry 28, coupled to CPU 22 and telephony circuit 10, controls the recording and playing on a cassette tape. Cassette motor and transport system 30 controls the movement of the tape. A voice synthesis circuit 32 provides the system prompting messages.

Voice synthesis circuit 32 preferably contains digitized speech in a memory which is reconverted to analog signals. Alternately, a separate tape recorder could be used.

The connection of telephony circuit 10 to CO simulator 16 and trunk line 20 is simply one method of providing access to the voice mail system. Alternately, for example, the voice mail system could be one extension of a PABX system.

Figure 2 shows a schematic representation of a magnetic tape 34 used by the voice mail system. Four tracks, T1-T4, of tape 34 are shown. Lines 36 indicate the boundaries of the various cells.  Line 38 indicates the center of tape 34.  The addresses of certain cells are indicated by numbers C97-C104 at the top of the figure.  Examples of the storage of messages for different mailboxes are shown by the indication of numbers representative of a mailbox in certain of the cells.  For instance, cell C99 on track T1 is designated with mailbox M1, as is cell C103 on track T2.  Referring to Table 1 below, which shows the association of cell messages with mailboxes in the system memory, one can see the above two cells stored in conjunction with mailbox M1.

TABLE 1

| Mailbox Address | Messages (Track/Cell) |
|---|---|
| M1 | (T1, C99);  (T2, C103) |
| M2 | (T1, C102) |
| M3 | (T2, C99);  (T3, C102) |

Cells C100 and C101 on track T1 contain a system greeting message and a system directory, respectively.  Cells C100 and C101 on track T2 contain other system messages.  In operation, to record a message, the voice mail system selects the closest available cell to center 38.

After a boxholder reviews a message, he may indicate that the message should be deleted causing the reference to such cell under the mailbox in memory, as indicated in Table 1, to be deleted.  Thus, that cell will be available for the recording of another message over the recorded message presently in the cell.

The voice mail system can generate a system greeting, a system directory of mailbox numbers, individual mailbox greetings and prompting messages for users.  The system greeting, system directory, and other messages are frequently played and are thus stored in the cells closest to center 38 of the tape 34.  This storing location provides quick access to these messages.

Prompting messages are separately generated by a voice synthesizer 32, rather than being stored on tape 34. Voice synthesizer 32 is used because these messages need to be played while the system is accessing a cell on tape 34, and thus cannot simultaneously play a message from the tape. The system is thus able to access a cell while the prompting message is being played, thereby improving the perceived system response time.

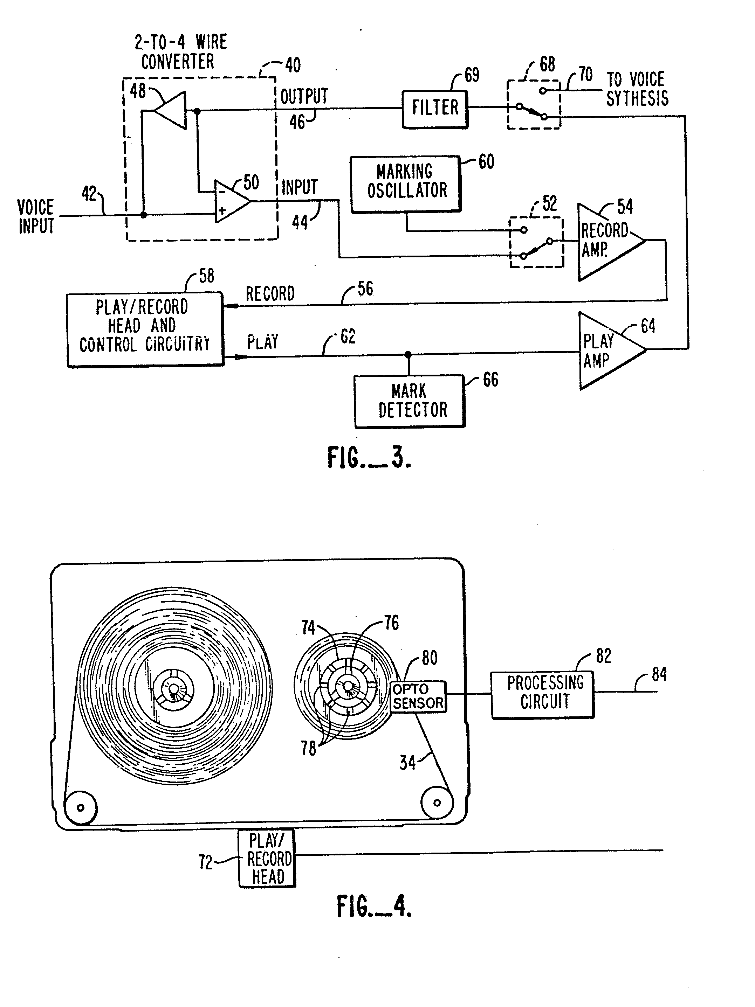

The operation of the system of Figure 1 is best understood by referring to the detail of audio circuitry 28 shown in Figure 3. Audio circuit 28 processes the voice input through a 2-to-4 wire converter 40. An input line 44 and an output line 46 are coupled to one side of 2-to-4 wire converter 40. A two-wire telephone line input 42 is coupled to converter 40, which provides ingoing signals on input 44 to the remainder of audio circuit 28. An output line 46 of audio circuit 28, with outgoing signals, is coupled to telephone line 42 by converter 40. Output signals on line 46, which also appear on telephone line 42, are subtracted out from the signals on telephone line 42 so that input 44 has only remotely originating-user input signals. This subtraction is illustrated graphically by isolating amplifier 48, which couples line 46 to line 42, and subtracting amplifier 50. Output line 46 is coupled to one input of amplifier 50 and is subtracted from the other input of line 42. Thus, the output signals from output line 46, which appear on telephone line 42, do not appear on input 44, thereby enabling a boxholder to input a control signal while a message is being played by the voice mail system.

Input line 44 is coupled to a switch 52 which is connected to recording amp 54, which is coupled via a record line 56 to the play/record head and control circuitry 58. Switch 52, which is controlled by microprocessor 24, determines whether the input signal is coupled to the play/record head 58. Alternately, switch 52 will couple a marking oscillator 60 to play/record
head 58.  Oscillator 60 produces a frequency tone mark
indicating the beginning of a cell.

A play output 62 of play/record head 58 is
coupled to a play amplifier 64.  Play output 62 is also
coupled to a mark detector 66 which detects the presence
of a mark at the beginning of a cell.  Play amplifier
64 is coupled to a switch 68, which is connected to
output line 46 through a filter 69.  Switch 68 is also
coupled to a line 70 which is connected to voice synthesizer 32.  Switch 68 is controlled by microprocessor 24
and couples line 46 to voice synthesizer 32 whenever a
system message from the synthesizer is to be transmitted.

Major features of the system may include the
ability to leave messages, review messages, check message status, and add a personal greeting (in addition
to the system greeting) for a particular boxholder's
mailbox. While reviewing messages, a boxholder has the
ability, among other features, to back up the tape,
skip to the next message, delete a message, and restart
the message.  The boxholder indicates the action to be
taken by inputting a DTMF signal to the system.  The
system is able to detect such an input code tone while
it is playing a message, because the played message is
subtracted from input 42 in 2-to-4 wire converter 40.
Thus, although the telephone line 42 has the tone code
plus the voice message being played, the subtraction of
the output message signal in 2-to-4 wire converter 40
results in only the tone code being input to the voice
mail system.

Figure 4 shows a schematic representation of
a counting mechanism in transport system 30 for determining the position of tape 34 relative to a play/record
head 72.  A slotted ring is mounted on a reel axle 76.
Slotted ring 74 has 18 slots in it.  As reel axle 76
turns, an optical sensor 80 detects the passing slots.
The output of optical sensor 80 is processed by circuitry 82 to produce a signal for the passing of a slot on the ring. Output 84 of circuit 82 is provided to microprocessor 24. Microprocessor 24 counts the signals which correspond to slots 78 passing transducer 80.

Each count is referred to herein as a tick. The location of a cell on tape 34 is stored in memory 26 as a track number and a cell number. The beginning of a cell 36 is determined by the number of ticks from the center 38 of tape 34. The tick count will correspond to the position of play/record head 72 over tape 34. However, because the diameter of a wrap of tape around reel 76 will vary, the number of ticks per inch of tape will vary. A conversion formula must be applied to the tick count in order to express the beginning of a cell 36 or the length of a cell in terms of ticks.

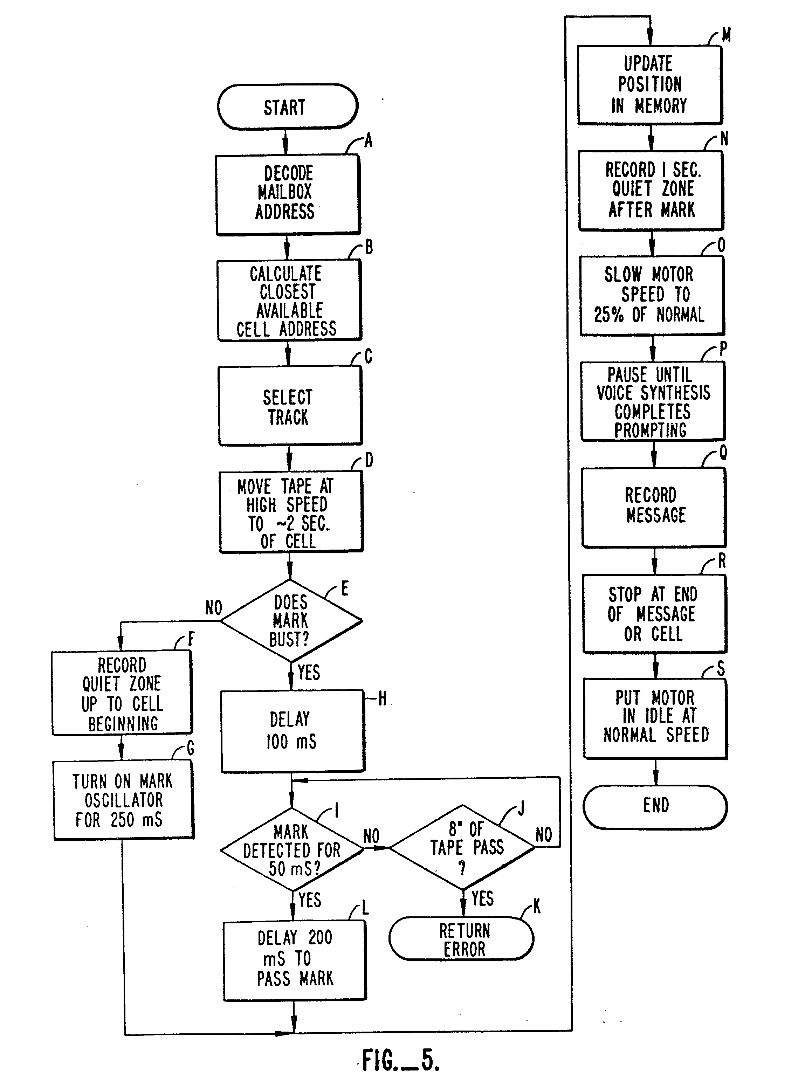

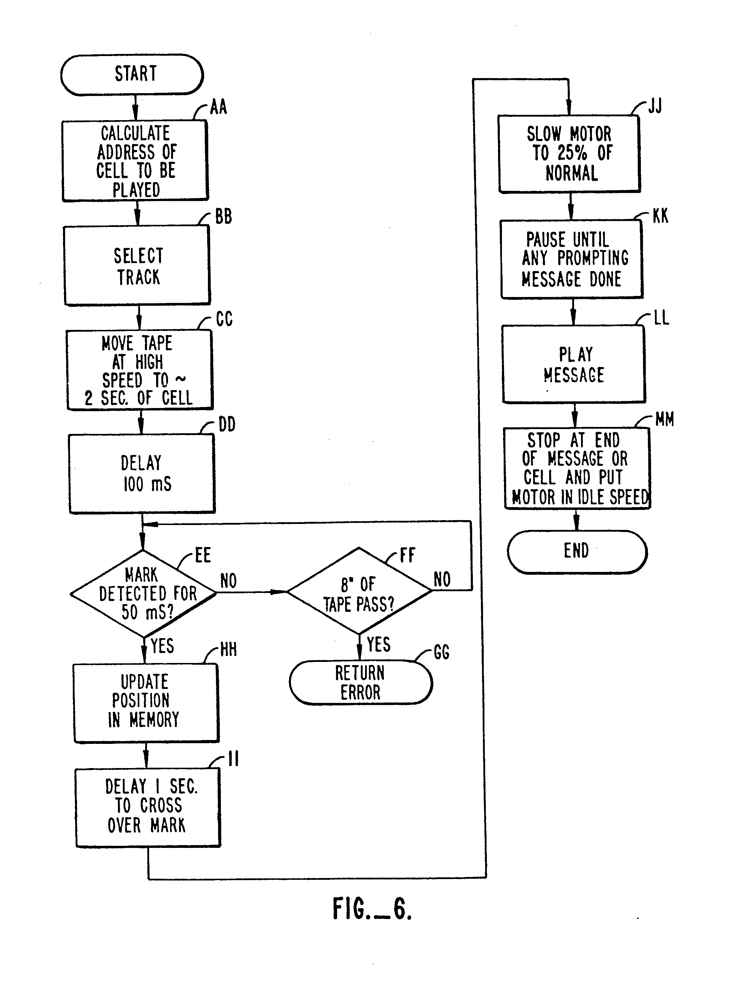

The operation of the present invention is best understood by referring to the flow charts in Figures 5 and 6. The flow chart of Figure 5 shows the steps for recording a message on the voice mail system. A user can access the system through local access 18 or central office line 12, as shown in Figure 1. The system greeting message of Fig. 2 is transmitted to the user. The system greeting is located on tape 34 and played in the same manner as other messages, as described below with reference to Figure 6. CPU 22 directs appropriate prompting messages to the user by directing switch 68 to connect to line 70, and voice synthesizer 32 to generate an appropriate prompting message. CPU 22 then responds to input signals from the user.

The record sequence of Figure 5 commences when the user inputs a DTMF code indicating that he desires to leave a message. The user then inputs a DTMF code for the mailbox address to which the message is to be delivered in response to a prompting message. CPU 22 will decode the mailbox address (Step A) and will calculate the track and the number of ticks to the closest available cell (Step B). CPU 22 will then instruct control circuitry 58 for play/record head 72 to select the appropriate track (Step C). The tape will then be moved at a high speed on fast-forward or reverse to position the play/record head 72 within approximately 2 seconds, at normal speed, of the available cell (Step D). The position of record head 72 over tape 34 is determined by counting the number of ticks.

CPU 22 will then determine whether a mark exists at the beginning of the cell (Step E). If this is the first time that the subject cell has been accessed, no mark will exist. Record control 58 will then be put on mute and a quiet zone will be recorded up to the calculated position of the beginning of the cell (Step F). Mark oscillator 60 will then be turned on for 250 milliseconds, being coupled to the play/record control 58 by switch 52 on instructions from CPU 22 (Step G). A single frequency, high amplitude 250 mS marking signal is thus recorded at the beginning of the cell. This method eliminates the need for the difficult formatting of tape 34 prior to operating the voice mail system and results in an automatically formatting system.

If, in Step E, CPU 22 had determined that the mark already exists, transport 30 will pause for 100ms to allow play/record head 72 to register against tape 34 (Step H). Mark detector 66 will then be monitored by CPU 22 to determine whether there is an indication of a mark present for at least 50 milliseconds (Step I). If no mark is detected after 8 inches of tape (Step J), an error will be indicated and the routine will end (Step K). When a mark is detected, an additional 200 milliseconds will be allowed to pass while motor 30 is running in order to enable the rest of the mark (which should be 250 milliseconds long) to pass play/record head 72 (Step L).

The system's notion of its current position on the tape is then updated by changing the tick count to equal the tick count corresponding to the beginning of the cell in memory 26 (Step M). The actual position on the tape may have varied from the desired position due to slippage or stretching of the tape, or other similar causes. In addition, an error in the tick count could result from dithering (the loss of ticks when starting and stopping transport 30) and different packing densities of tape 34 on counter reel 76. A one-second quiet zone is then recorded after the mark (Step N). Motor 30 is then slowed to 25% of its normal speed (Step O). Control system 58 is then placed into a pause mode until any prompting messages currently being transmitted by voice synthesizer 32 are completed (Step P). In particular, it is anticipated that a prompting message, indicating to the user that he may now record his message, may still be running.

The message from the user is then recorded (Step Q). At the end of the message or the time allocated to the cell, transport 30 is stopped (Step R). Motor 30 is then put in an idle mode at normal speed (Step S), and CPU 22 awaits further instructions. If the message is continuing as the end of the cell is reached, a prompting message will inquire whether the user desires to continue the message. Upon receipt of an appropriate user response by CPU 22, a standby prompting message will be transmitted to the user and CPU 22 will locate the closest available cell and repeat the recording procedure. The two cells will be linked together in memory 26.

The speed with which motor 30 can arrive at the desired cell is improved because all recording is done at approximately 25% of the normal cassette record speed. This low speed requires a high frequency response tape in order to result in an acceptable quality of the voice recording. Lower speeds are limited by the frequency response characteristics of tape 34 and wow and flutter.

The routine for playing a recorded message is shown by the flow chart of Figure 6. A boxholder may receive a message waiting signal from the voice mail system, or may call in to check for messages. A system greeting will be played and CPU 22 will direct appropriate prompting messages and respond to inputs from such boxholder. The boxholder will input a DTMF code indicating that he desires to review his messages, and an additional DTMF code which gives his personal mailbox I.D. number. This I.D. number prevents unauthorized access to the system. CPU 22 will determine whether any cells are listed under the input mailbox address. CPU 22, for each such cell, will determine the track and the number of ticks to the location of such cell (Step AA). CPU 22 will then instruct control circuitry 58 for play/record head 72 to select the appropriate track (Step BB). Tape 34 will then be moved at high speed until play/record head 72 is within approximately two seconds, at normal speed, of the mark (Step CC). Transport 30 will then pause for 100ms to allow play/record head 72 to register against tape 34 before mark detector 66 is monitored (Step DD). Mark detector 66 is then monitored to determine if a mark is indicated for a period of 50 milliseconds (Step EE). If a mark is not indicated for 8 inches of tape (Step FF), CPU 22 will indicate an error and end the routine (Step GG).

Upon a mark being detected, CPU 22 will update the tick count to correspond to the indicated location of the mark in memory 26 (Step HH). Motor 30 will then continue for one second to allow sufficient delay in order to pass over the remainder of the mark and into the quiet zone on the other side of the mark (Step II). Motor 30 will then be slowed to 25% of its normal speed (Step JJ).

CPU 22 will then cause motor 30 to pause until any prompting message from voice synthesizer 32 is completed (Step KK). The message in the cell will then

0195272

be played (Step LL).  At the end of the message, motor 30 will be put in idle at normal speed (Step MM).

If the message was long enough to span two cells, a pointer to another cell address would have been contained in memory 26 and CPU 22 would then cause the system to proceed to such cell address, and the above process would be repeated.  During such movement, a message from voice synthesizer 32 would indicate that the message will continue momentarily.

The voice mail system described above can have a number of features programmed into it.  For instance, a personal code enables a boxholder to review messages in his mailbox.  The system can include procedures for entering and changing such personal code. The system can also provide that a boxholder can record a personal mailbox greeting for any callers.  Upon a user commanding the system to record a message into a boxholder's mailbox, the system would instruct cassette transport system 30 to go to a cell which will contain the recorded greeting and play the greeting before prompting the user to leave a message.  The system could also be programmed to allow such a user to input a code during the playing of such message to skip the remainder of the message and proceed to recording the message. CPU 22 constantly monitors input 44 for such code commands while messages or prompting signals are being played.

Distribution list messages could be sent by programming and updating distribution lists into the system and indicating the address of the distribution lists as the mailbox address.  CPU 22 would then list all of the individual mailboxes on such distribution list as having received the applicable message.

The present invention will allow any number of other features to be added, limited only by the imagination of the customer.  The system of the present

14 0195272

invention is thus adaptable to provide a large number of valuable services.

As will be understood by those familiar with the art, the present invention may be embodied in other specific forms without departing from the spirit or essential characteristics thereof. Accordingly, the disclosure of the preferred embodiments of the invention is intended to be illustrative, but not limiting, of the scope of the invention, which is set forth in the following claims.

WHAT IS CLAIMED IS:

1.   A method for recording audio messages transmitted from a user's telephone station on a magnetic tape, and subsequently forwarding the messages to recipients designated by a mailbox address transmitted by said user, comprising:

(a)  providing a record access signal to allow a user to transmit a message from a telephone station;

(b)  determining the location of one cell of a plurality of cells on said tape for recording a message in response to said record access signal;

(c)  recording an audio message from said user in said cell;

(d)  storing the location of said cell in association with said mailbox address;

(e)  providing a play access signal to allow a recipient to receive a message;

(f)  determining the location of said cell stored in association with said mailbox address in response to said play access signal; and

(g)  transmitting the message recorded in said cell to said recipient.

2.   The method of claim 1 further comprising the step of placing a center portion of said tape proximate to record and play heads between transmissions from users and to recipients.

3.    The method of claim 1 further comprising the step of transmitting prompting messages to said user and said recipient.

4.    The method of claim 1 further comprising the step of recording a marking signal on the tape at the beginning of each cell.

5.    The method of claim 4 wherein said step of transmitting the message comprises:
         moving the tape at a first speed until the play head is at a position proximate and prior to the marking signal on the tape for such cell;
         moving the tape at a second speed until said marking signal is detected; and
         playing the message in said cell.

6.    The method of claim 5 wherein said step of moving the tape at a first speed includes:
         providing a slotted ring coupled to a reel of said tape;
         producing a signal in a transducer mounted proximate said slotted ring each time a slot of said ring passes said transducer;
         counting said signals; and
         ceasing the movement of said tape when the signal count corresponds to a position proximate and prior to said cell.

7.    The method of claim 1 wherein said play access signal includes a code identifying said recipient whereby unauthorized playing of a message is prevented.


8.    A method for recording audio messages transmitted from a user's telephone station on a multiple track magnetic tape and subsequently forwarding the messages to recipients designated by a mailbox address transmitted by said user, comprising:

(a)   providing a record access signal to allow a user to transmit a message from a telephone station;

(b)   determining, in response to said record access signal, a cell, out of a plurality of cells into which the tracks of said tape are divided which is the closest cell to the center of said tape not stored in association with a mailbox address;

(c)   recording an audio message from said user in said cell;

(d)   storing the location of said cell in a memory in association with said mailbox address;

(e)   providing a play access signal to allow a recipient to receive a message;

(f)   determining the location of said cell stored in association with said mailbox address in response to said play access signal;

(g)   transmitting the message recorded in said cell to said recipient; and

(h)   placing a center portion of said tape proximate record and play heads between transmissions from users and to recipients.

9. An apparatus for recording audio messages transmitted from a user's telephone station with a record access signal on a magnetic tape, and subsequently forwarding the messages to a recipient designated by a mailbox address transmitted by said user, upon transmission of a play access signal by said recipient, comprising:

(a) means for determining the location of one cell of a plurality of cells on said tape for ding a message in response to said record access mal;

(b) means for recording an audio message from said user in said cell;

(c) means for storing the location of said cell in association with said mailbox address;

(d) means for determining the location of said cell stored in association with said mailbox address in response to said play access signal; and

(e) means for transmitting the message recorded in said cell to said recipient.

10. A voice mail system for recording audio messages transmitted over a telephone line from a user's telephone station and subsequently forwarding the messages to recipients designated by a mailbox address transmitted by said user, comprising:

(a) a multiple track magnetic tape with each track divided into a plurality of cells;

(b) means, coupled to said telephone line, for receiving control signals and audio messages;

(c) processing means, coupled to said receiving means, for decoding said control signals and controlling the operation of said voice mail system;

(d)  record head means, controlled by said processing means and coupled to said receiving means, for recording audio messages in said cells;

(e)  memory means, controlled by said processing means, for storing cell locations in association with mailbox addresses;

(f)  play head means, controlled by said processing means and coupled to said telephone line, for playing a message recorded in a cell; and

(g)  tape motor means, controlled by said processing means and coupled to said tape, for moving said cells on said tape past said record head means and said play head means;

whereby an audio message from a user is recorded in an unused cell, the location of such cell is stored in the memory means in association with a mailbox address provided by the user and the message is forwarded to a recipient upon reception of a control signal from the recipient designating said mailbox address.

= AUDIO

— DATA AND
  CONTROL

FIG._1.

CENTER OF TAPE

| ... C97 | C98 | C99 | C100 | C101 | C102 | C103 | C104 ... |
|---------|-----|-----|------|------|------|------|----------|
| | | M1 | SYSTEM GREETING | SYSTEM DIRECTORY | M2 | | T1 |
| | | M3 | SYSTEM MESSAGE | SYSTEM MESSAGE | | M1 | T2 |
| | | | | | M3 | | T3 |
| | | | M4 | | | | T4 |

FIG._2.

## 2-TO-4 WIRE CONVERTER

48

40

OUTPUT

46

69 FILTER

68 70 TO VOICE SYTHESIS

50 INPUT

42 VOICE INPUT

44

MARKING OSCILLATOR 60

52

54 RECORD AMP.

58 PLAY/RECORD HEAD AND CONTROL CIRCUITRY

RECORD 56

PLAY 62

64 PLAY AMP

MARK DETECTOR 66

**FIG._3.**

74 76

80 OPTO SENSOR

82 PROCESSING CIRCUIT

84

78

34

72 PLAY/ RECORD HEAD

**FIG._4.**

FIG._5.

FIG._6.